# EUROPÄISCHE PATENTSCHRIFT

(11) **EP 3 027 484 B1**
(45) Veröffentlichungstag und Bekanntmachung des Hinweises auf die Patenterteilung: **26.06.2019**
(21) Anmeldenummer: 14748157.6
(22) Anmeldetag: 30.07.2014
(51) Int. Cl.: B60W 50/08, G05D 1/00, B60K 35/00, B60W 50/14

(54) **VERFAHREN ZUM NUTZEN EINES KOMMUNIKATIONSENDGERÄTS IN EINEM KRAFTFAHRZEUG BEIM AKTIVIERTEN AUTOPILOTEN UND KRAFTFAHRZEUG**
METHOD FOR USING A COMMUNICATION TERMINAL IN A MOTOR VEHICLE WHILE AUTOPILOT IS ACTIVATED AND MOTOR VEHICLE
PROCÉDÉ D'UTILISATION D'UN TERMINAL DE COMMUNICATION DANS UN VÉHICULE AUTOMOBILE LORS DE L'ACTIVATION DU PILOTAGE AUTOMATIQUE ET VÉHICULE AUTOMOBILE

(30) Priorität: 31.07.2013 DE 102013012777
(43) Veröffentlichungstag der Anmeldung: 08.06.2016
(73) Patentinhaber: Valeo Schalter und Sensoren GmbH, 74321 Bietigheim-Bissingen (DE)
(72) Erfinder: REILHAC, Patrice, 74321 Bietigheim-Bissingen (DE)
(86) Internationale Anmeldenummer: PCT/EP2014/066378
(87) Internationale Veröffentlichungsnummer: WO 2015/014894

(56) Entgegenhaltungen:
- WO-A1-2007/021263
- DE-A1-102006 006 995
- DE-A1-102009 048 954
- DE-U1- 29 806 461
- FR-A1- 2 861 657
- US-A1- 2012 105 613
- US-A1- 2013 045 677
- US-A1- 2013 117 021
- US-B1- 8 346 426

## Beschreibung

Die Erfindung betrifft ein Verfahren zum Betreiben eines Kraftfahrzeugs, welches zwischen einem manuellen Fahrmodus, in welchem das Kraftfahrzeug durch einen Fahrer geführt wird, und einem automatischen Fahrmodus geschaltet wird, in welchem mittels einer Steuereinrichtung des Kraftfahrzeugs selbsttätig eine Längs- und Querführung des Kraftfahrzeugs durchgeführt werden, wobei zumindest in dem manuellen Fahrmodus eine fahrzeugeigene Anzeigeeinrichtung des Kraftfahrzeugs mittels einer an einem Lenkrad des Kraftfahrzeugs angeordneten Eingabeeinrichtung bedient wird. Die Erfindung betrifft außerdem ein Kraftfahrzeug zum Durchführen eines derartigen Verfahrens.

Fahrerassistenzeinrichtungen zum automatischen Führen eines Kraftfahrzeugs sind bereits aus dem Stand der Technik bekannt. Ein solcher Autopilot kann dabei sowohl die Steuerung der Längsführung als auch die Steuerung der Querführung des Kraftfahrzeugs übernehmen. Dies bedeutet, dass sowohl das Beschleunigen und Bremsen als auch der Lenkwinkel automatisch mittels einer Steuereinrichtung des Kraftfahrzeugs gesteuert werden. Dazu kann die Steuereinrichtung entsprechende Steuersignale an ein Lenksystem des Kraftfahrzeugs sowie an einen Antriebsstrang abgeben. Das automatische Führen des Kraftfahrzeugs erfolgt dabei ohne ein Zutun des Fahrers.

Das automatische Fahren ist grundsätzlich lediglich in vorbestimmten Fahrsituationen möglich. Ob das Kraftfahrzeug von dem manuellen Fahrmodus in den automatischen Fahrmodus umgeschaltet und somit autonom durch die Steuereinrichtung geführt werden kann, hängt von einer Vielzahl von Parametern ab, welche mittels der Steuereinrichtung fortlaufend überprüft werden. Es wird mittels der Steuereinrichtung kontinuierlich überprüft, ob vorbestimmte Kriterien zum Aktivieren des Autopiloten aktuell erfüllt sind oder nicht. Eines dieser Kriterien kann voraussetzen, dass auf der Fahrbahn Längsmarkierungen angebracht sind, welche mittels der Steuereinrichtung anhand von Bilddaten einer Kamera detektiert werden können. Ein weiteres Kriterium kann zum Beispiel sein, dass für die geplante Route bis zu einem vorgegebenen Zielort eine ausreichend genaue Straßenkarte zur Verfügung steht, welche dem automatischen Fahren zugrunde gelegt werden kann. Weitere Bedingungen können beispielsweise den Zustand der Fahrbahn, die aktuellen Wetterbedingungen sowie die aktuelle Verkehrsdichte betreffen.

Stellt die Steuereinrichtung fest, dass die Kriterien erfüllt sind, so kann dem Fahrer die Möglichkeit des Umschaltens in den automatischen Fahrmodus mittels einer entsprechenden Ausgabeeinrichtung signalisiert werden, nämlich insbesondere optisch und/oder akustisch. Auf diese Art und Weise wird der Fahrer über die Möglichkeit der Aktivierung des Autopiloten informiert und kann den automatischen Fahrmodus selbst einschalten, indem beispielsweise eine entsprechende Eingabe an einer dazu vorgesehenen Bedieneinrichtung im Kraftfahrzeug vorgenommen wird. Beim aktivierten automatischen Fahrmodus hat der Fahrer außerdem stets die Möglichkeit, den Autopiloten wieder zu deaktivieren und das Kraftfahrzeug wieder in den manuellen Fahrmodus umzuschalten, in welchem die Kontrolle über das Kraftfahrzeug durch den Fahrer selbst übernommen wird. Dazu braucht der Fahrer beispielsweise lediglich wieder das Lenkrad zu ergreifen und die lenkbaren Räder selbst zu lenken. Eine solche Vorgehensweise ist beispielsweise in den Dokumenten US 2010/0228417, DE 10 2011 013 023 A1 sowie US 2012/089 294 beschrieben. Diese Druckschriften schlagen verschiedene Methoden vor, wie der Fahrer die Kontrolle über sein Fahrzeug wieder übernehmen kann.

Ein Verfahren zum betreiben eines Kraftfahrzeugs ist aus dem gattungsbildenden Dokument DE 10 2009 048954 bekannt.

Wird ein Kraftfahrzeug automatisch mittels einer Steuereinrichtung geführt, so ist es in bestimmten Fällen auch erforderlich, die Kontrolle über das Kraftfahrzeug automatisch wieder an den Fahrer zu übergeben. Dies ist beispielsweise dann nötig, wenn eine Kollisionsgefahr detektiert wird oder aber wenn sich die Umgebungsbedingungen rasch verändern und beispielsweise Regen detektiert wird. Als problematisch bei derartigen Situationen hat sich jedoch die Kommunikation zwischen dem Kraftfahrzeug und dem Fahrer erwiesen. Soll die Kontrolle über das Fahrzeug wieder an den Fahrer abgegeben werden, so soll dies dem Fahrer auch entsprechend signalisiert werden, und es soll sichergestellt werden, dass der Fahrer die Kontrolle über das Kraftfahrzeug besonders schnell und zuverlässig übernehmen kann. Dies hat sich im Stand der Technik insbesondere aus dem Grund als schwierig erwiesen, weil sich der Fahrer während des automatischen Fahrmodus üblicherweise nicht auf die aktuelle Straßensituation konzentriert und seine Hände außerdem nicht am Lenkrad positioniert sind. Dies ist beispielsweise dann der Fall, wenn während des automatischen Fahrmodus der Fahrer ein tragbares Kommunikationsendgerät bedient, wie beispielsweise ein Mobiltelefon, einen so genannten Tablet-PC, ein Notebook oder dergleichen. Muss der Fahrer in solchen Situationen wieder die Kontrolle über das Kraftfahrzeug übernehmen, so kann dies erfahrungsgemäß relativ lange dauern, bis der Fahrer seine Hände wieder am Lenkrad positioniert und seinen Blick wieder nach vorne auf die Straße richtet. Eine besondere Herausforderung besteht somit darin, einerseits dem Fahrer die Möglichkeit zu geben, seine Kommunikationsendgeräte während des automatischen Fahrmodus unbeschränkt zu nutzen, und andererseits Maßnahmen zu treffen, die beim Umschalten von dem automatischen Fahrmodus in den manuellen Fahrmodus gewährleisten, dass die Aufmerksamkeit des Fahrers besonders schnell wieder auf das Straßengeschehen gerichtet wird.

Es ist Aufgabe der Erfindung, eine Lösung aufzuzeigen, wie bei einem Verfahren der eingangs genannten Gattung die Aufmerksamkeit des Fahrers beim Umschalten von dem automatischen Fahrmodus in den manuellen Fahrmodus besonders schnell wieder auf die Führung des Kraftfahrzeugs gerichtet werden kann.

Diese Aufgabe wird erfindungsgemäß durch ein Verfahren sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Bei einem erfindungsgemäßen Verfahren wird ein Kraftfahrzeug zwischen einem manuellen Fahrmodus und einem automatischen Fahrmodus geschaltet. In dem manuellen Fahrmodus wird das Kraftfahrzeug durch einen Fahrer geführt, nämlich insbesondere unter Verwendung eines Lenkrads und unter Verwendung von Pedalen des Kraftfahrzeugs. In dem automatischen Fahrmodus hingegen wird die Längs- und Querführung des Kraftfahrzeugs autonom bzw. automatisch mittels einer Steuereinrichtung des Kraftfahrzeugs durchgeführt. Dies bedeutet, dass die Steuereinrichtung selbsttätig und somit ohne ein Zutun des Fahrers sowohl den Lenkwinkel des Kraftfahrzeugs als auch die Beschleunigungs- und Bremsvorgänge des Kraftfahrzeugs steuert. Zumindest in dem manuellen Fahrmodus wird eine fahrzeugeigene und somit fest in dem Kraftfahrzeug eingebaute Anzeigeeinrichtung des Kraftfahrzeugs mittels einer an dem Lenkrad angeordneten Eingabeeinrichtung bedient. Der Fahrer kann somit entsprechende Eingaben an der Eingabeeinrichtung des Lenkrads vornehmen und somit die Anzeigeeinrichtung steuern. Es wird eine Kommunikationsverbindung zwischen einer Kommunikationseinrichtung des Kraftfahrzeugs einerseits und einem von dem Kraftfahrzeug separaten, tragbaren Kommunikationsendgerät hergestellt. In dem automatischen Fahrmodus wird ein Unterhaltungsmodus aktiviert, in welchem über die Kommunikationsverbindung durch die Eingabeeinrichtung des Lenkrads erzeugte Eingabedaten an das Kommunikationsendgerät übertragen werden, sodass das Kommunikationsendgerät somit mittels der Eingabeeinrichtung des Lenkrads gesteuert wird bzw. die Eingabeeinrichtung zum Vornehmen von Eingaben an dem Kommunikationsendgerät verwendet wird. Ergänzend oder alternativ ist vorgesehen, dass in dem Unterhaltungsmodus durch das Kommunikationsendgerät erzeugte Bilddaten zur Anzeige auf der fahrzeugeigenen Anzeigeeinrichtung an die Kommunikationseinrichtung des Kraftfahrzeugs übertragen werden, sodass die Anzeigeeinrichtung zur Anzeige von Bilddaten des Kommunikationsendgeräts verwendet wird.

Erfindungsgemäß ist somit vorgesehen, dass eine fahrzeugeigene Benutzerschnittstelle des Kraftfahrzeugs in dem automatischen Fahrmodus als eine Schnittstelle zum Bedienen des Kommunikationsendgeräts verwendet wird. Einerseits kann der Fahrer somit sein Kommunikationsendgerät über die Eingabeeinrichtung des Lenkrads bedienen, und zwar ohne seine Hände von dem Lenkrad wegnehmen zu müssen. Andererseits braucht der Fahrer auch nicht das Display des tragbaren Kommunikationsendgeräts zu betrachten, denn die Bildschirminhalte des tragbaren Kommunikationsendgeräts können auf der fahrzeugeigenen Anzeigeeinrichtung dargestellt werden. Auf diese Art und Weise kann der Fahrer seine Körperhaltung beibehalten, die er sonst auch beim manuellen Führen des Kraftfahrzeugs üblicherweise hat. Beim Umschalten von dem automatischen Fahrmodus in den manuellen Fahrmodus wird somit erreicht, dass der Fahrer seine Hände bereits an dem Lenkrad hält und/oder seine Blickrichtung bereits in Fahrtrichtung nach vorne gerichtet ist, sodass hier wertvolle Sekunden gewonnen werden können. Beim Umschalten von dem automatischen Fahrmodus in den manuellen Fahrmodus übernimmt der Fahrer auf diese Art und Weise besonders schnell wieder die Kontrolle über das Kraftfahrzeug, und es können gefährliche Situationen verhindert werden. Ein weiterer Vorteil des erfindungsgemäßen Verfahrens liegt in der benutzerfreundlichen Bedienung des Kommunikationsendgeräts. Der Fahrer kann das Kommunikationsendgerät nämlich unter Verwendung der benutzerfreundlichen und häufig deutlich bequemeren und ergonomischeren fahrzeugseitigen Benutzerschnittstelle bedienen und so beispielsweise auf die auf dem Kommunikationsendgerät installierten Applikationen bzw. Anwendungen zugreifen. So wird beispielsweise ein im Vergleich zu einem Kommunikationsendgerät deutlich größeres Display des Kraftfahrzeugs und/oder die ergonomische Eingabeeinrichtung des Lenkrads genutzt. Der Fahrer hat somit im Unterhaltungsmodus die Möglichkeit, über die Benutzerschnittstelle des Kraftfahrzeugs auch das Kommunikationsendgerät zu steuern.

Unter einem tragbaren Kommunikationsendgerät wird vorliegend ein mobiles Endgerät verstanden, welches zur Kommunikation mit anderen Endgeräten ausgebildet ist. Das Kommunikationsendgerät kann beispielsweise ein Mobiltelefon mit einem Display (so genanntes Smartphone), ein Tablet-PC, ein Notebook oder ein anderes Endgerät sein, auf welchem ein beliebiges Betriebssystem installiert ist und auch andere Anwendungen bzw. Applikationen installiert werden können.

Die fahrzeugeigene Kommunikationseinrichtung kann beispielsweise dazu ausgebildet sein, die Kommunikationsverbindung mit dem tragbaren Kommunikationsendgerät mithilfe eines standardisierten Kommunikationsprotokolls aufzubauen. Vorzugsweise ist die genannte Kommunikationsverbindung eine drahtlose Datenaustauschverbindung, über welche die Eingabedaten und/oder die Bilddaten drahtlos übertragen werden. Als Kommunikationsstandard für die Kommunikationsverbindung kann beispielsweise der so genannte "Bluetooth Low Energy"-Standard und/oder ein Kommunikationsstandard der "WLAN"- bzw. "WiFi"-Familie, wie beispielsweise der so genannte "Miracast"-Kommunikationsstandard, und/oder ein herstellerspezifischer Kommunikationsstandard, wie beispielsweise der Airplay-Standard und/oder der WiDi-Standard, eingesetzt werden.

Fahrzeugseitig kann der Kommunikationseinrichtung eine Steuereinheit - beispielsweise in Form eines Mikrocontrollers - zugeordnet sein, welche die Kommunikation und somit den Datenaustausch mit dem Kommunikationsendgerät steuert. Diese Steuereinheit kann die genannten Eingabedaten bereitstellen und als Steuersignale an das Kommunikationsendgerät übermitteln und/oder die Bilddaten des Kommunikationsendgeräts empfangen und veranlassen, dass eine diesen Bilddaten entsprechende Darstellung mittels der fahrzeugseitigen Anzeigeeinrichtung angezeigt wird.

Vorzugsweise ist vorgesehen, dass der Fahrer ausschließlich in dem automatischen Fahrmodus die Möglichkeit hat, über die fahrzeugseitige Benutzerschnittstelle das Kommunikationsendgerät zu bedienen. Es ist in einer Ausführungsform vorgesehen, dass beim Umschalten des Kraftfahrzeugs von dem automatischen Fahrmodus in den manuellen Fahrmodus der Unterhaltungsmodus deaktiviert wird. Somit wird im manuellen Fahrmodus die Übertragung der Bilddaten und/oder der Eingabedaten unterbunden. Beispielsweise kann hier sogar die Kommunikationsverbindung zwischen dem Kraftfahrzeug und dem Kommunikationsendgerät unterbrochen werden. Auf diese Art und Weise wird gewährleistet, dass sich der Fahrer wieder auf das Straßengeschehen konzentrieren kann und somit nicht durch das Bedienen des Kommunikationsendgeräts von der Straßensituation abgelenkt wird. Beim Umschalten des Kraftfahrzeugs von dem automatischen in den manuellen Fahrmodus und somit beim Deaktivieren des Unterhaltungsmodus kann die Eingabeeinrichtung des Lenkrads wieder auf herkömmliche Art und Weise zur Steuerung der Anzeigeeinrichtung genutzt werden. In dem manuellen Fahrmodus werden auf der Anzeigeeinrichtung vorzugsweise lediglich fahrspezifische bzw. fahrzeugbezogene Informationen angezeigt, wie zum Beispiel Navigationshinweise, Verbrauchswerte des Kraftfahrzeugs und dergleichen.

Vorzugsweise umfassen die von dem Kommunikationsendgerät an die Kommunikationseinrichtung übermittelten Bilddaten einen aktuellen Bildschirminhalt des Kommunikationsendgeräts. Dann kann eine mittels der Anzeigeeinrichtung des Kraftfahrzeugs angezeigte Darstellung entsprechend dem Bildschirminhalt des Kommunikationsendgeräts erzeugt werden. Dies bedeutet insbesondere, dass die mittels der Anzeigeeinrichtung angezeigte Darstellung anhand der empfangenen Bilddaten fortlaufend mit dem Bildschirminhalt des Kommunikationsendgeräts synchronisiert wird. Mit anderen Worten wird mittels der fahrzeugseitigen Anzeigeeinrichtung die gleiche Darstellung angezeigt, wie sie momentan auch auf einem Display des Kommunikationsendgeräts angezeigt wird. Der Fahrer braucht somit das Kommunikationsendgerät überhaupt nicht zu betrachten und muss das Kommunikationsendgerät auch nicht greifbar haben, um auf die Dateninhalte des Kommunikationsendgeräts zugreifen zu können. Dies erweist sich insbesondere in Situationen als vorteilhaft, in denen das Kommunikationsendgerät außerhalb der Greifreichweite des Fahrers liegt, wie etwa in einem Kofferraum. Außerdem wird dadurch ermöglicht, dass der Fahrer seinen Blick stets und unterbrechungsfrei auf die fahrzeugeigene Anzeigeeinrichtung richten kann und somit beim Umschalten in den manuellen Fahrmodus sofort die Straßensituation erfassen kann.

Es ist vorteilhaft, wenn die Eingabeeinrichtung des Lenkrads eine berührungssensitive Fläche bzw. ein so genanntes "Touchpad" umfasst und die Eingabedaten in Abhängigkeit von einer Position erzeugt werden, an welcher die berührungssensitive Fläche durch den Fahrer berührt wird. Somit kann der Fahrer über die Eingabeeinrichtung des Lenkrads das Kommunikationsendgerät auf die gleiche Art und Weise bedienen, wie dies auch üblicherweise bei den herkömmlichen Kommunikationsendgeräten der Fall ist, nämlich mithilfe einer berührungssensitiven Fläche. Somit ist die Bedienung besonders benutzerfreundlich.

Als problematisch hat sich nun herausgestellt, dass bei üblichen Kommunikationsendgeräten, wie zum Beispiel Mobiltelefonen, ein so genannter Touchscreen eingesetzt wird, bei welchem der Benutzer stets weiß, welche Symbole auf dem Display er tatsächlich berührt. Dies ist bei einer von der Anzeigeeinrichtung örtlich entkoppelten berührungssensitiven Fläche nicht der Fall, sodass hier zusätzliche Maßnahmen getroffen werden müssen, die gewährleisten, dass der Fahrer darüber informiert wird, an welcher Stelle er die berührungssensitive Fläche berühren muss, um die gewünschten Funktionen auswählen zu können.

Um dieses Problem zu lösen, wird vorgeschlagen, mittels eines Sensors eine Position eines Körperteils des Fahrers - insbesondere eines Fingers - über der berührungssensitiven Fläche des Lenkrads und relativ zu dieser Fläche zu detektieren und in eine mittels der Anzeigeeinrichtung aktuell angezeigte Darstellung einen Cursor einzublenden, dessen Position abhängig von der Position des Körperteils über der berührungssensitiven Fläche eingestellt wird. Die Position des Körperteils wird bei dieser Ausführungsform also bereits bei einer Annäherung an die berührungssensitive Fläche gemessen, und die Darstellung des Cursors wird so angepasst, dass die Position des Cursors auf der Anzeigeeinrichtung der aktuellen Position des Körperteils relativ zur berührungssensitiven Fläche entspricht. Der Fahrer kann somit sofort erfassen, in welche Richtung er seinen Körperteil bewegen muss, um die gewünschte Funktion auszuwählen, beispielsweise das gewünschte Objekt auf der Anzeigeeinrichtung auszuwählen und die zugeordnete Applikation zu aktivieren. Wird dann die berührungssensitive Fläche berührt, kann der Cursor auf der Anzeigeeinrichtung vergrößert dargestellt werden, um das Berühren der berührungssensitiven Fläche zu signalisieren.

Ergänzend oder alternativ kann auch vorgesehen sein, dass als die Anzeigeeinrichtung ein an dem Lenkrad angeordnetes Display verwendet wird, welches die berührungssensitive Fläche umfasst. Dieses Display ist dann ein Touchscreen, das gleichzeitig als Eingabeeinrichtung und Anzeigeeinrichtung fungiert. Ergänzend oder alternativ kann als die Anzeigeeinrichtung auch ein so genanntes Head-Up-Display verwendet werden, d.h. ein Projektor, mittels welchem die Darstellung auf die Windschutzscheibe projiziert wird.

Ganz allgemein kann vorgesehen sein, dass als die Anzeigeeinrichtung ein Display eines Kombiinstruments des Kraftfahrzeugs verwendet wird, das sich in Fahrtrichtung direkt vor dem Fahrer bzw. vor dem Fahrersitz befindet. Es wird somit erreicht, dass auch in dem automatischen Fahrmodus die Blickrichtung des Fahrers stets in Fahrtrichtung nach vorne orientiert ist, was - wie bereits ausgeführt - den Vorteil hat, dass beim Umschalten in den manuellen Fahrmodus der Fahrer besonders rasch wieder eine gute Übersicht über das Straßengeschehen gewinnen kann.

In einer Ausführungsform ist vorgesehen, dass mittels einer Entkopplungseinrichtung des Kraftfahrzeugs das Lenkrad in dem Unterhaltungsmodus von einer Lenkbewegung der lenkbaren Räder des Kraftfahrzeugs vollständig entkoppelt wird. Durch eine derartige Entkopplungseinrichtung wird erreicht, dass das Lenkrad in dem Unterhaltungsmodus stets in der gleichen Winkelposition - insbesondere in einer Nullposition - gehalten werden kann, und zwar unabhängig davon, in welcher Winkelposition sich aktuell die lenkbaren Räder des Kraftfahrzeugs befinden. Ein Lenken der Räder führt somit nicht zur Drehung des Lenkrads. Dies hat den Vorteil, dass der Fahrer beim Bedienen des Kommunikationsendgeräts in dem Unterhaltungsmodus nicht beeinträchtigt wird und die Eingabeeinrichtung stets nutzen kann, ohne dass die Winkelposition des Lenkrads fortlaufend verfolgt und die Körperhaltung entsprechend angepasst werden muss.

In dem Unterhaltungsmodus kann auch vorgesehen sein, dass mittels der Anzeigeeinrichtung Bilder angezeigt werden, welche auf Bilddaten beruhen, die mittels zumindest einer an dem Kraftfahrzeug angeordneten Kamera bereitgestellt werden. Beispielsweise kann es sich dabei um eine an einer Seitenflanke des Kraftfahrzeugs angeordnete und zum Beispiel in einen Seitenspiegel integrierte Kamera handeln, welche einen seitlichen Umgebungsbereich neben dem Kraftfahrzeug erfasst. Die aufgenommenen Bilder können dann auf der Anzeigeeinrichtung dargestellt werden, sodass der Fahrer über die Situation um das Kraftfahrzeug herum informiert wird. Insbesondere können dabei Videodaten angezeigt werden, welche einerseits durch eine in den linken Außenspiegel integrierte Kamera und andererseits durch eine in den rechten Außenspiegel integrierte Kamera aufgenommen werden. Der Fahrer bekommt somit direkt auf der Anzeigeeinrichtung auch die Situation links und rechts neben dem Kraftfahrzeug angezeigt und braucht somit seinen Blick nicht von der Anzeigeeinrichtung wegzunehmen.

Die Erfindung betrifft außerdem ein Kraftfahrzeug, welches zwischen einem manuellen Fahrmodus und einem automatischen Fahrmodus geschaltet werden kann und eine Steuereinrichtung umfasst, die in dem automatischen Fahrmodus selbsttätig eine Längs-und Querführung des Kraftfahrzeugs durchführt. Das Kraftfahrzeug weist außerdem eine Anzeigeeinrichtung und eine an einem Lenkrad angeordnete Eingabeeinrichtung zum Bedienen der Anzeigeeinrichtung zumindest in dem manuellen Fahrmodus auf. Das Kraftfahrzeug umfasst eine Kommunikationseinrichtung, welche zum Herstellen einer Kommunikationsverbindung mit einem tragbaren Kommunikationsendgerät ausgebildet ist, sowie eine Steuereinheit, welche in dem automatischen Fahrmodus einen Unterhaltungsmodus aktiviert und in dem Unterhaltungsmodus über die Kommunikationsverbindung durch die Eingabeeinrichtung des Lenkrads erzeugte Eingabedaten an das Kommunikationsendgerät überträgt und/oder durch das Kommunikationsendgerät erzeugte Bilddaten empfängt und mittels der Anzeigeeinrichtung anzeigt.

Die mit Bezug auf das erfindungsgemäße Verfahren vorgestellten bevorzugten Ausführungsformen und deren Vorteile gelten entsprechend für das erfindungsgemäße Kraftfahrzeug.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines Ausführungsbeispiels sowie unter Bezugnahme auf die beigefügten Zeichnungen näher erläutert.

Es zeigen:
- Fig. 1: in schematischer Darstellung ein Kraftfahrzeug gemäß einer Ausführungsform der Erfindung; und
- Fig. 2: in schematischer Darstellung einen vorderen Bereich eines Innenraums des Kraftfahrzeugs einschließlich eines Kombiinstruments und eines Lenkrads.

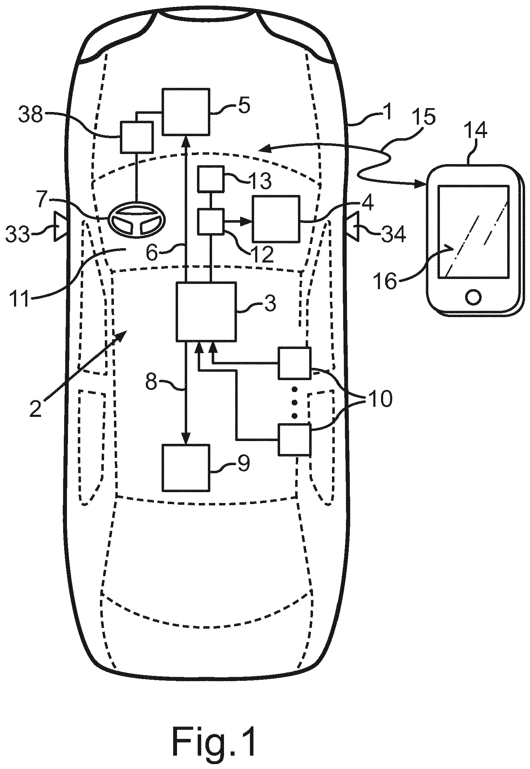

Ein in Fig. 1 dargestelltes Kraftfahrzeug 1 ist beispielsweise ein Personenkraftwagen. Das Kraftfahrzeug 1 beinhaltet eine Fahrerassistenzeinrichtung 2, welche zum automatischen Führen des Kraftfahrzeugs 1 ausgebildet ist und somit als Autopilot dient. Die Fahrerassistenzeinrichtung 2 umfasst eine Steuereinrichtung 3 sowie eine im Kraftfahrzeug 1 fest installierte Anzeigeeinrichtung 4. Die Steuereinrichtung 3 ist mit einer Lenkvorrichtung 5 des Kraftfahrzeugs 1 gekoppelt und kann Steuersignale 6 an die Lenkvorrichtung 5 abgeben, um den Lenkwinkel des Kraftfahrzeugs 1 autonom bzw. selbsttätig zu steuern, um das Kraftfahrzeug 1 zum Beispiel entlang einer vorab festgelegten Navigationsroute zu führen.

Mit der Lenkvorrichtung 5 ist außerdem ein Lenkrad 7 verbunden. Die Steuereinrichtung 3 kann entsprechende Steuersignale 8 auch an einen Antriebsstrang 9 des Kraftfahrzeugs 1 abgeben, um auch die Längsführung des Kraftfahrzeugs 1 zu steuern. Durch Abgabe der Steuersignale 8 an den Antriebsstrang 9 kann das Kraftfahrzeug 1 automatisch mittels der Steuereinrichtung 3 beschleunigt und gebremst werden.

Die Steuereinrichtung 3 empfängt außerdem Sensordaten von einer Sensoreinrichtung 10, welche eine Vielzahl von Sensoren beinhalten kann. Die Sensoreinrichtung 10 kann beispielsweise Umfeldsensoren zur Detektion von Hindernissen beinhalten, wie beispielsweise Ultraschallsensoren und/oder Radarsensoren und/oder optische Sensoren. Ergänzend oder alternativ kann die Sensoreinrichtung 10 auch Sensoren beinhalten, welche zur Detektion von aktuellen Umgebungsbedingungen in der Umgebung des Kraftfahrzeugs 1 dienen. Es kann sich dabei zum Beispiel um einen Regensensor handeln.

Weiterhin kann die Sensoreinrichtung 10 auch einen Navigationsempfänger beinhalten, welcher zum Bereitstellen von Positionsdaten ausgebildet ist, welche die aktuelle geografische Position des Kraftfahrzeugs 1 charakterisieren.

Die Fahrerassistenzeinrichtung 2 bzw. das Kraftfahrzeug 1 kann von einem manuellen Fahrmodus in einen automatischen Fahrmodus umgeschaltet werden, sodass quasi ein Autopilot aktiviert wird. In diesem automatischen Fahrmodus steuert die Steuereinrichtung 3 sowohl den Lenkwinkel und somit die Querführung als auch die Längsführung des Kraftfahrzeugs 1.

Befindet sich das Kraftfahrzeug 1 in dem manuellen Fahrmodus, so überprüft die Steuereinrichtung 3 fortlaufend, ob vorbestimmte Kriterien zum Aktivieren des automatischen Fahrmodus erfüllt sind oder nicht. Diese Kriterien werden anhand der Sensordaten der Sensoreinrichtung 10 überprüft. Wird durch die Steuereinrichtung 3 festgestellt, dass die Aktivierung des automatischen Fahrmodus zum aktuellen Zeitpunkt möglich ist, so wird dies dem Fahrer signalisiert, und der Fahrer kann den aktuellen Fahrmodus unter Vornahme einer Eingabe an einer entsprechenden Eingabeeinrichtung aktivieren. Der Fahrer kann es alternativ auch bei dem manuellen Fahrmodus belassen und das Kraftfahrzeug 1 weiterhin selbst führen. Wird der automatische Fahrmodus aktiviert, so wird das Kraftfahrzeug 1 autonom durch die Steuereinrichtung 3 geführt.

Beim aktivierten automatischen Fahrmodus gibt es dann zwei Möglichkeiten für die Deaktivierung des automatischen Fahrmodus und die Umschaltung in den manuellen Fahrmodus: Zum einen hat der Fahrer selbst stets die Möglichkeit, das Kraftfahrzeug 1 von dem automatischen wieder in den manuellen Fahrmodus umzuschalten. Dies kann zum Beispiel mittels der genannten Eingabeeinrichtung vorgenommen werden. Zum anderen kann es jedoch auch vorkommen, dass der automatische Fahrmodus automatisch mittels der Steuereinrichtung 3 autonom und somit fahrerunabhängig wieder deaktiviert werden muss, wenn durch die Steuereinrichtung 3 festgestellt wird, dass eines der oben genannten Kriterien nicht mehr erfüllt ist. Dies kann beispielsweise dann passieren, wenn anhand der Sensordaten der Sensoreinrichtung 10 ein großer Gefahrengrad bezüglich einer Kollision mit einem Hindernis und/oder Regen detektiert wird und/oder eine vorgegebene Zeitdauer seit dem Aktivieren des automatischen Fahrmodus verstrichen ist und/oder keine genaue Straßenkarte für die Navigation des Kraftfahrzeugs 1 zur Verfügung steht. Dabei kann vorgesehen sein, dass, bevor der automatische Fahrmodus deaktiviert und der manuelle Fahrmodus wieder aktiviert wird, ein Übergangsmodus aktiviert wird, in welchem die Kontrolle über die Fahrzeugführung an den Fahrer übergeben werden soll. In diesem Übergangsmodus überprüft die Steuereinrichtung 3, ob der Fahrer das Lenkrad 7 betätigt und somit die Kontrolle über das Kraftfahrzeug 1 übernimmt oder nicht. Zu diesem Zwecke kann beispielsweise überprüft werden, ob das Lenkrad 7 durch den Fahrer selbst gedreht wird. Ergänzend oder alternativ können an dem Lenkrad 7 auch Berührungssensoren angeordnet sein, welche eine Berührung des Lenkradkranzes detektieren können. Weiterhin ergänzend oder alternativ kann auch eine Kamera eingesetzt werden, wie weiter unten näher beschrieben wird.

Bezüglich der Anzeigeeinrichtung 4 können folgende Ausführungsformen vorgesehen sein: Die Anzeigeeinrichtung 4 kann grundsätzlich ein Teil eines Kombiinstruments des Kraftfahrzeugs 1 sein und eine der folgenden Komponenten beinhalten:
- ein transparentes Display, welches an einer Windschutzscheibe 11 des Kraftfahrzeugs 1 angebracht und außerdem direkt vor dem Fahrersitz und somit auf der Fahrerseite bezüglich der Fahrzeugmittellängsachse angeordnet ist, und/oder
- ein Head-Up-Display, mittels welchem eine Darstellung auf die Windschutzscheibe 11 projiziert wird - es kann auch ein so genanntes Panorama-Head-up-Display mit einem relativ breiten horizontalen Öffnungswinkel von 15° bis 50° eingesetzt werden, und/oder
- ein Display, welches direkt in das Kombiinstrument bzw. das Armaturenbrett vor dem Fahrersitz integriert ist, und/oder
- ein Display an dem Lenkrad 7, beispielsweise auch ein Touchscreen mit einer berührungssensitiven Fläche als Teil der Eingabeeinrichtung.

Mit weiterem Bezug auf Fig. 1 umfasst das Kraftfahrzeug 1 auch eine elektronische Steuereinheit 12, welche mit der Anzeigeeinrichtung 4 gekoppelt ist und diese ansteuert. Die Steuereinheit 12 ist des Weiteren mit der genannten und in Fig. 1 nicht näher dargestellten Eingabeeinrichtung gekoppelt, welche am Lenkrad 7 angeordnet ist. Die Steuereinheit 12 ist des Weiteren mit der Steuereinrichtung 3 gekoppelt und kann mit dieser kommunizieren. Außerdem ist die Steuereinheit 12 mit einer fahrzeugeigenen Kommunikationseinrichtung 13 gekoppelt, welche zur drahtlosen Kommunikation mit einem Kommunikationsendgerät 14 ausgebildet ist. Zwischen der Kommunikationseinrichtung 13 einerseits und dem Kommunikationsendgerät 14 andererseits kann eine Kommunikationsverbindung 15 aufgebaut werden, welche drahtlos ist und einen der bereits bekannten Kommunikationsstandards nutzen kann. Das Kommunikationsendgerät 14 ist beispielsweise als Mobiltelefon mit einem Display 16 ausgebildet, welches als Touchscreen ausgeführt sein kann.

Zwar ist die Steuereinheit 12 in Fig. 1 als eine separat zur Steuereinrichtung 3 ausgebildete Komponente dargestellt. Jedoch kann auch vorgesehen sein, dass die Steuereinheit 12 und die Steuereinrichtung 3 durch ein und dasselbe Steuergerät gebildet sind, welches sowohl zur Ansteuerung der Lenkvorrichtung 5 und des Antriebsstrangs 9 als auch zur Ansteuerung der Anzeigeeinrichtung 4 dient.

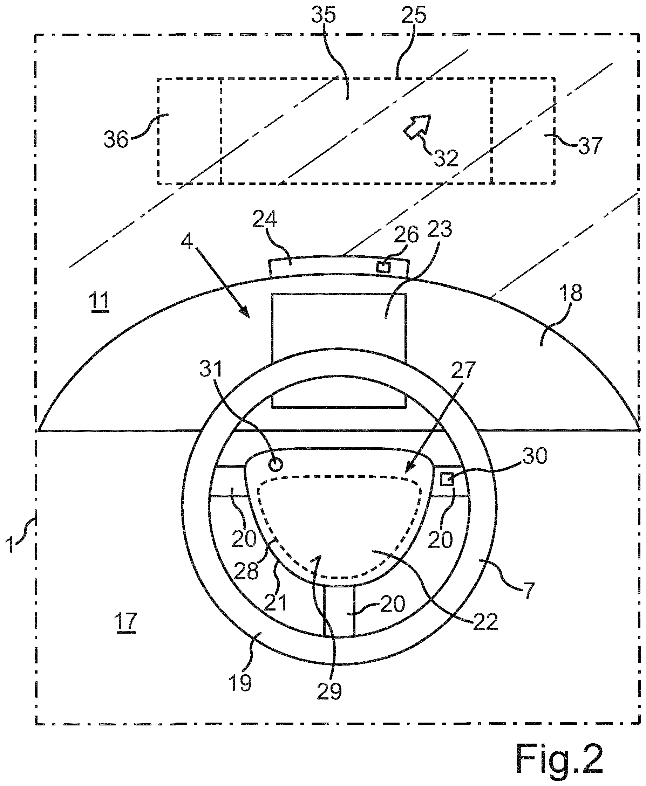

In Fig. 2 ist in schematischer Darstellung ein vorderer Bereich eines Innenraums 17 des Kraftfahrzeugs 1 einschließlich der Windschutzscheibe 11, des Lenkrads 7 und eines Kombiinstruments 18 dargestellt. Fig. 2 zeigt dabei das Lenkrad 7 von dem Blickpunkt des Fahrers aus. In an sich bekannter Weise ist das Lenkrad 7 vor der Windschutzscheibe 11 angeordnet, d.h. zwischen der Windschutzscheibe 11 einerseits und dem Fahrersitz andererseits. Zwischen dem Lenkrad 7 und der Windschutzscheibe 11 befindet sich das Kombiinstrument 18, welches optional auch einen Tachometer, einen Kilometerzähler, gegebenenfalls einen Drehzahlmesser und dergleichen aufweisen kann.

Das Lenkrad 7 weist einen Lenkradkranz 19 auf, welcher beispielsweise ringförmig ausgebildet ist. Über Lenkradspeichen 20, an denen gegebenenfalls Bedienelemente angeordnet sein können, ist der Lenkradkranz 19 mit einer Nabe 21 verbunden. Die Nabe 21 trägt eine Abdeckung 22 für einen nicht dargestellten Airbag, welcher in die Nabe 21 integriert ist. Die Abdeckung 22 ist dem Fahrer zugewandt und von außen sichtbar. Die Abdeckung 22 bzw. die Nabe 21 kann grundsätzlich verschiedenste geometrische Formen aufweisen. Lediglich beispielhaft seien hier die Kreisform, die Rechteckform, eine ovale Form sowie eine in Fig. 2 dargestellte D-Form genannt.

Wie bereits ausgeführt, kann die Anzeigeeinrichtung 4 beispielsweise ein in das Kombiinstrument 8 integriertes Display 23 und/oder ein Head-up-Display 24 aufweisen. Das Display 23 kann beispielsweise ein LCD-Display sein. Das Head-up-Display 24 ist ein Projektor, welcher zum Projizieren von Darstellungen auf die Windschutzscheibe 11 ausgebildet ist. Eine solche Darstellung ist in Fig. 2 mit 25 angedeutet. Optional kann in das Head-up-Display 24 eine Kamera 26 integriert sein, welche auf den Fahrer ausgerichtet ist und somit Bilder bereitstellt, in welchen der Fahrer abgebildet ist. Diese Bilder können an die Steuereinrichtung 3 übermittelt werden, und die Steuereinrichtung 3 kann anhand der Bilder überprüfen, ob in dem genannten Übergangsmodus, wenn von dem automatischen Fahrmodus in den manuellen Fahrmodus umgeschaltet wird, der Fahrer die Kontrolle über das Lenkrad 7 übernimmt oder nicht. Außerdem kann optional auch der Müdigkeitsgrad des Fahrers bestimmt werden.

Wie bereits ausgeführt, kann an dem Lenkrad 7 eine Eingabeeinrichtung 27 angeordnet sein. Diese kann ein Touchpad 28 mit einer berührungssensitiven Fläche 29 aufweisen, welche insbesondere auch die Oberfläche der Abdeckung 22 bildet. Das Touchpad 28 ist dazu ausgebildet, eine Position zu erfassen, an welcher der Fahrer mit seinem Finger die berührungssensitive Fläche 29 berührt. Diese Informationen werden von der Steuereinheit 12 erfasst. Optional kann die Eingabeeinrichtung 27 auch Bedienelemente beinhalten, welche an zumindest einer der Lenkradspeichen 20 angeordnet sind. Ein solches Bedienelement ist in Fig. 2 mit 30 bezeichnet. Mittels des Bedienelements 30 kann der Fahrer beispielsweise den automatischen Fahrmodus aktivieren und/oder deaktivieren.

In dem manuellen Fahrmodus, in welchem der Fahrer das Kraftfahrzeug 1 selbst führt, kann die Anzeigeeinrichtung 4 mithilfe der am Lenkrad 7 angeordneten Eingabeeinrichtung 27 gesteuert werden, nämlich mittels der berührungssensitiven Fläche 29 und/oder mittels der genannten Bedienelemente. Im manuellen Fahrmodus können mittels der Anzeigeeinrichtung 4 ausschließlich fahrbezogene Informationen angezeigt werden, nicht jedoch Multimediadaten und dergleichen. Wird jedoch in den automatischen Fahrmodus umgeschaltet, so aktiviert die Steuereinheit 12 einen Unterhaltungsmodus, in welchem die Anzeigeeinrichtung 4 auch für Multimediadaten genutzt werden kann. In diesem Unterhaltungsmodus kann die Benutzerschnittstelle des Kraftfahrzeugs 1 einschließlich der Eingabeeinrichtung 27 und der Anzeigeeinrichtung 4 als Schnittstelle zum Bedienen des Kommunikationsendgeräts 14 genutzt werden. Die Anzeigeeinrichtung 4 dient dann als Ausgabegerät des Kommunikationsendgeräts 14; die Eingabeeinrichtung 27 dient als Eingabegerät des Kommunikationsendgeräts 14. Es wird hier die Kommunikationsverbindung 15 aufgebaut. Die berührungssensitive Fläche 29 dient nun zum Steuern des Kommunikationsendgeräts 14 und somit zum Vornehmen von Eingaben an dem Kommunikationsendgerät 14. Dazu übermittelt die Steuereinheit 12 Eingabedaten an das Kommunikationsendgerät 14, durch welche das Kommunikationsendgerät 14 gesteuert wird. Andererseits werden von dem Kommunikationsendgerät 14 an die Steuereinheit 12 Bilddaten übermittelt, welche den aktuellen Bildschirminhalt des Displays 16 beinhalten. Mit anderen Worten werden von dem Kommunikationsendgerät 14 an die Steuereinheit 12 drahtlos Daten übermittelt, welche die aktuell auf dem Display 16 erzeugte Darstellung beinhalten. Diese Darstellung wird dann auch mittels der Anzeigeeinrichtung 4 angezeigt. Die Steuereinheit 12 steuert die Anzeigeeinrichtung 4 nämlich so an, dass die durch die Anzeigeeinrichtung 4 erzeugte Darstellung (beispielsweise die Darstellung 25) mit der Darstellung auf dem Display 16 des Kommunikationsendgeräts 14 synchronisiert und somit an diese angeglichen wird.

Das Kommunikationsendgerät 14 wird somit quasi ein Teil eines Infotainmentsystems des Kraftfahrzeugs 1. Aufgrund der örtlichen Entkopplung der Anzeigeeinrichtung 4 von der berührungssensitiven Fläche 29 kann ein Sensor 31 eingesetzt werden, mittels welchem die Position des Fingers des Fahrers auch über der berührungssensitiven Fläche 29 und relativ zu der Fläche 29 detektiert wird, und zwar in Richtung parallel zur Fläche 29 und somit in Längs- und Querrichtung der Fläche 29. In die Darstellung 25 kann dann ein Cursor 32 eingeblendet werden, dessen Position innerhalb der Darstellung 25 abhängig von der gemessenen Position des Fingers über der berührungsempfindlichen Fläche 29 eingestellt wird. Die Position des Cursors 32 relativ zur Darstellung 25 entspricht somit der Position des Fingers relativ zur Fläche 29 bzw. zur Nabe 21. Somit kann der Fahrer beispielsweise die gewünschten Applikationen auf dem Kommunikationsendgerät 14 unter Verwendung der Eingabeeinrichtung 27 aktivieren.

Mit Bezug auf Fig. 1 kann die Steuereinheit 12 auch Bilddaten bzw. Videodaten empfangen, welche durch Kameras 33, 34 bereitgestellt werden, die seitlich am Kraftfahrzeug 1 angeordnet sind und beispielsweise in die jeweiligen Außenspiegel integriert sein können. Die Videodaten der Kameras 33, 34 können auch im Rahmen der Darstellung 25 mittels der Anzeigeeinrichtung 4 angezeigt werden. Die Darstellung 25 kann dabei beispielsweise - wie in Fig. 2 schematisch dargestellt - in drei Bereiche unterteilt werden, nämlich einen zentralen Bereich 35, einen linken Randbereich 36 sowie einen rechten Randbereich 37. In dem linken Randbereich 36 können Videodaten der linken Kamera 33 angezeigt werden; in dem rechten Randbereich 37 können Videodaten der rechten Kamera 34 angezeigt werden. Somit bekommt der Fahrer mittels der Anzeigeeinrichtung 4 auch Bilder des Umgebungsbereichs angezeigt und kann somit stets die Windschutzscheibe 11 betrachten, wodurch beim Deaktivieren des automatischen Fahrmodus die Aufmerksamkeit sofort auf die Straßensituation gerichtet ist. Die Videodaten werden dabei ausschließlich in dem Unterhaltungsmodus angezeigt und nach Umschalten in den manuellen Fahrmodus wieder deaktiviert.

Wie in Fig. 1 dargestellt, kann das Kraftfahrzeug 1 eine Entkopplungseinrichtung 38 umfassen, welche so ausgebildet ist, dass im Unterhaltungsmodus bzw. im automatischen Fahrmodus das Lenkrad 7 von der Lenkbewegung der lenkbaren Räder des Kraftfahrzeugs 1 vollständig entkoppelt wird und sich somit beim Lenken der Räder nicht dreht. Die Entkopplungseinrichtung 38 kann beispielsweise auch sicherstellen, dass das Lenkrad 7 stets in der Nullstellung gehalten wird. Dies erleichtert dann die Bedienung der Eingabeeinrichtung 27.

## Patentansprüche

1. Verfahren zum Betreiben eines Kraftfahrzeugs (1), welches zwischen einem manuellen Fahrmodus, in welchem das Kraftfahrzeug (1) durch einen Fahrer geführt wird, und einem automatischen Fahrmodus geschaltet wird, in welchem mittels einer Steuereinrichtung (3) des Kraftfahrzeugs (1) selbsttätig eine Längs-und Querführung des Kraftfahrzeugs (1) durchgeführt werden, wobei zumindest in dem manuellen Fahrmodus eine fahrzeugeigene Anzeigeeinrichtung (4) des Kraftfahrzeugs (1) mittels einer an einem Lenkrad (7) des Kraftfahrzeugs (1) angeordneten Eingabeeinrichtung (27) bedient wird,
wobei eine Kommunikationsverbindung (15) zwischen einer Kommunikationseinrichtung (13) des Kraftfahrzeugs (1) einerseits und einem von dem Kraftfahrzeug (1) separaten, tragbaren Kommunikationsendgerät (14) hergestellt wird und in dem automatischen Fahrmodus des Kraftfahrzeugs (1) ein Unterhaltungsmodus aktiviert wird, in welchem über die Kommunikationsverbindung (15) durch die Eingabeeinrichtung (27) des Lenkrads (7) erzeugte Eingabedaten an das Kommunikationsendgerät (14) übertragen werden und/oder durch das Kommunikationsendgerät (14) erzeugte Bilddaten zur Anzeige auf der Anzeigeeinrichtung (4) an die Kommunikationseinrichtung (13) des Kraftfahrzeugs (1) übertragen werden, sodass die Eingabeeinrichtung (27) zum Durchführen von Eingaben an dem Kommunikationsendgerät (14) und/oder die Anzeigeeinrichtung (4) zur Anzeige von Bilddaten des Kommunikationsendgeräts (14) verwendet wird **dadurch gekennzeichnet, dass** mittels einer Entkopplungseinrichtung (38) des Kraftfahrzeugs (1) das Lenkrad (7) in dem Unterhaltungsmodus von einer Lenkbewegung der lenkbaren Räder des Kraftfahrzeugs (1) vollständig entkoppelt wird.

2. Verfahren nach Anspruch 1,
**dadurch gekennzeichnet, dass**
beim Umschalten des Kraftfahrzeugs (1) von dem automatischen Fahrmodus in den manuellen Fahrmodus der Unterhaltungsmodus deaktiviert wird.

3. Verfahren nach Anspruch 1 oder 2,
**dadurch gekennzeichnet, dass**
die von dem Kommunikationsendgerät (14) an die Kommunikationseinrichtung (13) übermittelten Bilddaten einen aktuellen Bildschirminhalt des Kommunikationsendgeräts (14) umfassen und eine mittels der Anzeigeeinrichtung (4) angezeigte Darstellung (25) entsprechend dem Bildschirminhalt des Kommunikationsendgeräts (14) erzeugt wird.

4. Verfahren nach einem der vorhergehenden Ansprüche,
**dadurch gekennzeichnet, dass**
die Eingabeeinrichtung (27) des Lenkrads (7) eine berührungssensitive Fläche (29) umfasst und die Eingabedaten in Abhängigkeit von einer Position erzeugt werden, an welcher die berührungssensitive Fläche (29) durch den Fahrer berührt wird.

5. Verfahren nach Anspruch 4,
**dadurch gekennzeichnet, dass**
mittels eines Sensors (31) eine Position eines Körperteils des Fahrers über der berührungssensitiven Fläche (29) des Lenkrads (7) relativ zu der berührungssensitiven Fläche (29) detektiert wird und in eine mittels der Anzeigeeinrichtung (4) angezeigte Darstellung (25) ein Cursor (32) eingeblendet wird, dessen Position abhängig von der Position des Körperteils über der berührungssensitiven Fläche (29) eingestellt wird.

6. Verfahren nach einem der vorhergehenden Ansprüche,
**dadurch gekennzeichnet, dass**
als die Anzeigeeinrichtung (4) ein Display (23, 24) eines Kombiinstruments (18) des Kraftfahrzeugs (1) verwendet wird.

7. Verfahren nach einem der vorhergehenden Ansprüche,
**dadurch gekennzeichnet, dass**
als die Anzeigeeinrichtung (4) ein Head-up-Display (24) und/oder ein an dem Lenkrad (7) angeordnetes Display verwendet wird.

8. Verfahren nach einem der vorhergehenden Ansprüche,
**dadurch gekennzeichnet, dass**
mittels der Anzeigeeinrichtung (4) in dem Unterhaltungsmodus Bilder angezeigt werden, welche auf Bilddaten beruhen, die mittels zumindest einer an dem Kraftfahrzeug (1) angeordneten Kamera (33, 34) bereitgestellt werden.

9. Kraftfahrzeug (1), welches zwischen einem manuellen Fahrmodus und einem automatischen Fahrmodus schaltbar ist, mit einer Steuereinrichtung (3), die dazu ausgelegt ist, in dem automatischen Fahrmodus selbsttätig eine Längs- und Querführung des Kraftfahrzeugs (1) durchzuführen, mit einer Anzeigeeinrichtung (4) und mit einer an einem Lenkrad (7) des Kraftfahrzeugs (1) angeordneten Eingabeeinrichtung (27) zum Bedienen der Anzeigeeinrichtung (4) zumindest in dem manuellen Fahrmodus,
wobei eine Kommunikationseinrichtung (13), welche zum Herstellen einer Kommunikationsverbindung (15) mit einem tragbaren Kommunikationsendgerät (14) ausgebildet ist, wobei das Kraftfahrzeug (1) eine Steuereinheit (12) umfasst, welche dazu ausgelegt ist, in dem automatischen Fahrmodus des Kraftfahrzeugs (1) einen Unterhaltungsmodus zu aktivieren und in dem Unterhaltungsmodus über die Kommunikationsverbindung (15) durch die Eingabeeinrichtung (27) des Lenkrads (7) erzeugte Eingabedaten an das Kommunikationsendgerät (14) zu übertragen und/oder durch das Kommunikationsendgerät (14) erzeugte Bilddaten zu empfangen und mittels der Anzeigeeinrichtung (4) anzuzeigen
**dadurch gekennzeichnet, dass** mittels einer Entkopplungseinrichtung (38) des Kraftfahrzeugs (1) das Lenkrad (7) in dem Unterhaltungsmodus von einer Lenkbewegung der lenkbaren Räder des Kraftfahrzeugs (1) vollständig entkoppelt wird.

## Claims

1. Method for operating a motor vehicle (1), which is switched between a manual driving mode, in which the motor vehicle (1) is guided by a driver, and an automatic driving mode, in which longitudinal guidance and transverse guidance of the motor vehicle (1) are carried out automatically by means of a control device (3) of the motor vehicle (1), wherein, at least in the manual driving mode, a vehicle-specific display device (4) of the motor vehicle (1) is operated by means of an input device (27) arranged on a steering wheel (7) of the motor vehicle (1),
wherein
a communication connection (15) is established between a communication device (13) of the motor vehicle (1), on the one hand, and a portable communication terminal (14) separate from the motor vehicle (1) and an entertainment mode is activated in the automatic driving mode of the motor vehicle (1), in which entertainment mode, via the communication connection (15), input data generated by the input device (27) of the steering wheel (7) are transmitted to the communication terminal (14) and/or image data generated by the communication terminal (14) for display on the display device (4) are transmitted to the communication device (13) of the motor vehicle (1), such that the input device (27) is used for carrying out inputs at the communication terminal (14) and/or the display device (4) is used for displaying image data of the communication terminal (14),
**characterized in that**
by means of a decoupling device (38) of the motor vehicle (1), the steering wheel (7) is completely decoupled from a steering movement of the steerable wheels of the motor vehicle (1) in the entertainment mode.

2. Method according to Claim 1,
**characterized in that**
the entertainment mode is deactivated when the motor vehicle (1) is switched from the automatic driving mode to the manual driving mode.

3. Method according to Claim 1 or 2,
**characterized in that**
the image data communicated from the communication terminal (14) to the communication device (13) comprise a current screen content of the communication terminal (14) and a representation (25) displayed by means of the display device (4) is generated in accordance with the screen content of the communication terminal (14).

4. Method according to any of the preceding claims,
**characterized in that**
the input device (27) of the steering wheel (7) comprises a touch-sensitive surface (29) and the input data are generated depending on a position at which the touch-sensitive surface (29) is touched by the driver.

5. Method according to Claim 4,
**characterized in that**
by means of a sensor (31) a position of a body part of the driver above the touch-sensitive surface (29) of the steering wheel (7) is detected relative to the touch-sensitive surface (29) and a cursor (32) is inserted into a representation (25) displayed by means of the display device (4), the position of said cursor (32) being set depending on the position of the body part above the touch-sensitive surface (29).

6. Method according to any of the preceding claims,
**characterized in that**
a display (23, 24) of an instrument cluster (18) of the motor vehicle (1) is used as the display device (4).

7. Method according to any of the preceding claims,
**characterized in that**
a head-up-display (24) and/or a display arranged on the steering wheel (7) is used as the display device (4).

8. Method according to any of the preceding claims,
**characterized in that**
images which are based on image data provided by means of at least one camera (33, 34) arranged on the motor vehicle (1) are displayed by means of the display device (4) in the entertainment mode.

9. Motor vehicle (1) which is switchable between a manual driving mode and an automatic driving mode, comprising a control device (3), which is designed to automatically carry out longitudinal guidance and transverse guidance of the motor vehicle (1) in the automatic driving mode, comprising a display device (4) and comprising an input device (27) arranged on a steering wheel (7) of the motor vehicle (1) and serving for operating the display device (4) at least in the manual driving mode,
wherein
a communication device (13) designed for establishing a communication connection (15) to a portable communication terminal (14), wherein the motor vehicle (1) comprises a control unit (12), which is designed to activate an entertainment mode in the automatic driving mode of the motor vehicle (1) and in the entertainment mode, via the communication connection (15), to transmit input data generated by the input device (27) of the steering wheel (7) to the communication terminal (14) and/or to receive image data generated by the communication terminal (14) and to display them by means of the display device (4),
**characterized in that**
by means of a decoupling device (38) of the motor vehicle (1), the steering wheel (7) is completely decoupled from a steering movement of the steerable wheels of the motor vehicle (1) in the entertainment mode.

## Revendications

1. Procédé permettant de faire fonctionner un véhicule automobile (1), qui est basculé entre un mode de conduite manuelle, dans lequel le véhicule automobile (1) est dirigé par un conducteur, et un mode de conduite automatique, dans lequel un guidage longitudinal et transversal du véhicule automobile (1) est effectué automatiquement au moyen d'un dispositif de commande (3) du véhicule automobile (1), dans lequel, au moins dans le mode de conduite manuelle, un dispositif d'affichage de véhicule (4) du véhicule automobile (1) est commandé au moyen d'un dispositif de saisie (27) disposé sur un volant (7) du véhicule automobile (1),
dans lequel une liaison de communication (15) est établie entre un dispositif de communication (13) du véhicule automobile (1) d'un côté, et un terminal de communication portable (14), séparé du véhicule automobile (1) et, dans le mode de conduite automatique du véhicule automobile (1), un mode de divertissement est activé, dans lequel des données de saisie générées par le dispositif de saisie (27) du volant (7) sont transmises au terminal de communication (14) par l'intermédiaire de la liaison de communication (15) et/ou des données d'image générées par le terminal de communication (14) sont transmises au dispositif de communication (13) du véhicule automobile (1) pour leur affichage sur le dispositif d'affichage (4), de sorte que le dispositif de saisie (27) est utilisé pour effectuer des saisies sur le terminal de communication (14) et/ou le dispositif d'affichage (4) est utilisé pour afficher des données d'image du terminal de communication (14),
**caractérisé en ce que**, dans le mode de divertissement, le volant (7) est entièrement découplé d'un mouvement de direction des roues directrices du véhicule automobile (1) au moyen d'un dispositif de découplage (38) du véhicule automobile (1).

2. Procédé selon la revendication 1,
**caractérisé en ce que** le mode de divertissement est désactivé lorsque le véhicule automobile (1) passe du mode de conduite automatique au mode de conduite manuelle.

3. Procédé selon la revendication 1 ou 2,
**caractérisé en ce que** les données d'image transmises du terminal de communication (14) au dispositif de communication (13) comprennent un contenu d'écran actuel du terminal de communication (14) et une représentation (25) affichée par le dispositif d'affichage (4) est générée d'une manière qui correspond au contenu d'écran du terminal de communication (14).

4. Procédé selon l'une des revendications précédentes,
**caractérisé en ce que** le dispositif de saisie (27) du volant (7) comprend une surface tactile (29) et **en ce que** les données de saisie sont générées en fonction d'une position à laquelle la surface tactile (29) est touchée par le conducteur.

5. Procédé selon la revendication 4,
**caractérisé en ce qu'**une position d'une partie du corps du conducteur au-dessus de la surface tactile (29) du volant (7) par rapport à la surface tactile (29) est détectée au moyen d'un capteur (31), et **en ce qu'**un curseur (32) dont la position est réglée en fonction de la position de la partie du corps au-dessus de la surface tactile (29) est incorporé à une représentation (25) affichée au moyen du dispositif d'affichage (4).

6. Procédé selon l'une des revendications précédentes,
**caractérisé en ce qu'**un afficheur (23, 24) d'un combiné d'instruments (18) du véhicule automobile (1) est utilisé en tant qu'afficheur (4).

7. Procédé selon l'une des revendications précédentes,
**caractérisé en ce qu'**un afficheur tête haute (24) et/ou un afficheur disposé sur le volant de direction (7) est utilisé en tant que dispositif d'affichage (4).

8. Procédé selon l'une des revendications précédentes,
**caractérisé en ce qu'**en mode de divertissement, le dispositif d'affichage (4) permet d'afficher des images fondées sur des données d'image qui sont fournies par au moins une caméra (33, 34) disposée sur le véhicule automobile (1).

9. Véhicule automobile (1), qui peut être basculé entre un mode de conduite manuelle et un mode de conduite automatique, comportant un dispositif de commande (3) qui, dans le mode de conduite automatique, est conçu pour effectuer un guidage longitudinal et transversal du véhicule automobile (1), un dispositif d'affichage (4) et un dispositif de saisie (27) disposé sur un volant (7) du véhicule automobile (1), qui sert à commander le dispositif d'affichage au moins dans le mode de conduite manuelle,
dans lequel il est prévu un dispositif de communication (13) conçu pour établir une liaison de communication (15) avec un terminal de communication portable (14), dans lequel le véhicule automobile (1) comprend une unité de commande (12) qui est conçue pour activer un mode de divertissement dans le mode de conduite automatique du véhicule automobile (1) et, dans le mode de divertissement, pour transmettre des données de saisie générées par le dispositif de saisie (27) du volant (7) au terminal de communication (14) par l'intermédiaire de la liaison de communication (15) et/ou pour recevoir des données d'image générées par le terminal de communication (14) et les afficher au moyen du dispositif d'affichage (4),
**caractérisé en ce que**, dans le mode de divertissement, le volant (7) est entièrement découplé d'un mouvement de direction des roues directrices du véhicule automobile (1) au moyen d'un dispositif de découplage (38) du véhicule automobile (1).
